# EUROPEAN PATENT APPLICATION

(11) **EP 3 955 355 A1**
(43) Date of publication of application: **16.02.2022**
(21) Application number: 21173995.8
(22) Date of filing: 17.05.2021
(51) Int. Cl.: H01M 10/04, H01M 10/0583, H01M 10/0585

(54) **MULTI-PLATE LAMINATING DEVICE FOR LITHIUM BATTERY CELL AND LAMINATING METHOD THEREOF**

(30) Priority: 11.08.2020 CN 202010803492
(71) Applicant: Shenzhen GDlaser Technology Co.,Ltd., Shenzhen, Guangdong (CN)
(72) Inventor: HE, Lin, Shenzhen (CN)
(74) Representative: Sun, Yiming

(57) **Abstract**

The present invention disclosed a multi-plate laminating device for a lithium battery cell, which includes a laminating platform, a separator releasing mechanism, a film-coating apparatus, and position correcting platforms. The separator releasing mechanism and the film-coating apparatus are disposed above the laminating platform, and the film-coating apparatus is used for guiding the separator of the separator releasing mechanism onto the laminating platform. The position correcting platforms are located on left and right sides of the laminating platform respectively, in order to correct positions of the electrode plates transported on the left and right sides. A plurality of electrode plates are laminated at the same time on a laminating platform, which significantly improves the lamination efficiency of the laminating device. A separator is covered on multiple electrode plates at a time thus improves the efficiency of film coating. The plurality of electrode plates are fed simultaneously, so that feeding efficiency of the electrode plates is improved and the cost of feeding is reduced. The plurality of electrode plates are discharged simultaneously, so that discharging efficiency of the electrode plates is improved and the cost of discharging is reduced. By improving the processing efficiency of laminating, film covering, feeding, and discharging, the labor and material costs of each process are reduced, and the time cost of laminating lithium battery cells is greatly lowered, thus this reduces costs and enhances the economic efficiency and competitiveness of enterprises.

## Description

### TECHNICAL FIELD

The present invention relates to a lithium battery laminating process, and in particularly, to a multi-plate laminating device for a lithium battery cell and a laminating method thereof.

### BACKGROUND

Lamination technology of lithium batteries is the manufacturing technology of lithium battery cells by separating a cathode and an anode (positive electrode plate and negative electrode plate) with a separator, and laminating the electrode plates and the separators. The principle and process are as follows: rolled separator is pulled out by a separator assembly, and separators are covered on the cathode and anode plates in intervals through a reciprocating movement of the laminating platform or the separator assembly. At the same time, the cathode and anode plates are placed alternately between the separators by a robotic arm or other conveying device, in order to be separated by the separators. The above process is repeated several times, and finally a laminated body of a lithium battery with a certain thickness is formed.

Existing laminating devices adopt a laminating method containing a single electrode, namely, only one electrode is placed on the laminating platform at a time by a robotic arm or other conveying device, and the laminating efficiency is low as it is impossible to laminate multiple electrode plates at the same time.

### SUMMARY OF THE APPLICATION

An objective of the present invention is to provide a multi-plate laminating device for a lithium battery cell and a laminating method thereof, capable of laminating a plurality of electrode plates at the same time on a laminating platform.

In order to achieve the above objective, the present invention provides a multi-plate laminating device for a lithium battery cell, which includes: a laminating platform, a separator releasing mechanism, a film-coating apparatus, and position correcting platforms. The separator releasing mechanism and the film-coating apparatus are disposed above the laminating platform, and the film-coating apparatus is used for guiding the separator of the separator releasing mechanism onto the laminating platform. The position correcting platforms are located on left and right sides of the laminating platform respectively, in order to correct positions of the electrode plates transported on the left and right sides.

Further, a charge-coupled-device (CCD) vision apparatus is arranged above each of the position correcting platforms correspondingly, and the CCD vision apparatus is used for guiding each position correcting platform to perform position correction on each electrode plate.

Further, electrode plate feeders/conveyors are further arranged on the left and right sides of the laminating platform, respectively, and are each arranged on an outside of the position correcting platforms away from the laminating platform.

Further, each electrode plate conveyor is a conveying belt means having a vacuum adsorbing structure.

Further, a plurality of robotic arms are provided, which are set at preset positions for transporting the electrode plates between each processing procedure.

A laminating method, which is applied by the aforementioned multi-plate laminating device for a lithium battery cell, comprises:
pre-processing incoming electrode plates to obtain the electrode plates to be laminated;
transporting a plurality of the electrode plates to be laminated to position correcting platforms on left and right sides at a same time by robotic arms for position correction;
transporting the electrode plates after the position correction and placing a preset number of the electrode plates at preset positions on the laminating platform side by side with the robotic arms;
guiding a separator from a separator releasing mechanism over the laminating platform by a film-coating apparatus, covering the separator on the electrode plates at the preset positions; and
repeating above steps until a preset laminating amount of the electrode plates is reached to complete lamination of the battery cell.

Further, when transporting the plurality of the electrode plates to be laminated to the position correcting platforms on the left and right sides at a same time by the robotic arms for position correction, cathodes and anodes are respectively placed on the position correcting platforms on the left and right sides in order to carry out the position correction respectively.

Further, when pre-processing incoming electrode plates to obtain the electrode plates to be laminated, the pre-processing includes:
unwinding incoming rolled material followed by controlling tension and rectifying any offset;
die-cutting/ cutting rectified incoming material into the electrode plates;
carrying out surface powdering and size inspection on the electrode plates after die-cutting/cutting;
performing NG rejection on unqualified electrode plates in the size inspection, and transferring qualified electrode plates after the NG rejection to vacuum conveyor for buffering.

Further, when transporting the electrode plates after the position correction and placing a preset number of the electrode plates at preset positions on the laminating platform side by side with the robotic arms, the preset number is any finite natural number that is no less than 2, and a maximum value of the preset number is manually selected according to an arrangement of the multi-plate laminating device for a lithium battery cell.

The advantageous effects of the present invention compared to the prior are that the present invention provides a multi-plate laminating device for a lithium battery cell and a laminating method thereof. A plurality of electrode plates are laminated at the same time on a laminating platform, which significantly improves the lamination efficiency of the laminating device. A separator is covered on multiple electrode plates at a time thus improves the efficiency of film coating. The plurality of electrode plates are fed simultaneously, so that feeding efficiency of the electrode plates is improved and the cost of feeding is reduced. The plurality of electrode plates are discharged simultaneously, so that discharging efficiency of the electrode plates is improved and the cost of discharging is reduced. By improving the processing efficiency of laminating, film covering, feeding, and discharging, the labor and material costs of each process are reduced, and the time cost of laminating lithium battery cells is greatly lowered, thus this reduces costs and enhances the economic efficiency and competitiveness of enterprises.

The above description is merely an overview of the technical solutions of the present invention. In order to more clearly understand the technical means of the present invention, they can be implemented in accordance with the content of this specification. And in order to make the above and other objectives, features and advantages of the present invention more obvious and understandable, preferred embodiments are described in detail as follows.

### BRIEF DESCRIPTION OF THE DRAWINGS

Fig. 1 is a top view of the laminating device of a first embodiment;
Fig. 2 is a front view of the laminating device shown in Fig. 1;
Fig. 3 is a top view of the laminating device of a second embodiment;
Fig. 4 is a front view of the laminating device shown in Fig. 3;
Fig. 5 is a top view of the laminating device of a third embodiment;
Fig. 6 is a front view of the laminating device shown in Fig. 5;
Fig. 7 is a front view of a schematic block diagram of the laminating process performed by the laminating device of a forth embodiment;
Fig. 8 is a top view of the schematic block diagram of the process shown in Fig. 7;
Fig. 9 is a front view of a schematic block diagram of the laminating process performed by the laminating device of a fifth embodiment; and
Fig. 10 is a top view of the schematic block diagram of the process shown in Fig. 7.

### Reference signs

first laminating platform 11, first separator 12, first electrode plate 13, second laminating platform 21, second separator 22, second electrode plate 23, third laminating platform 31, third separator 32, third electrode plate 23;
cathode conveying belt 1, cathode plate 2, positive electrode plate 3, cathode UVW position correcting platform 4, laminating platform 5, laminated electrode plates 6, anode UVW position correcting platform 7, negative electrode plate 8, anode conveying belt 9, anode plate 10;
first laminating platform 100, second laminating platform 200, separator releasing mechanism 300.

### DESCRIPTION OF THE EMBODIMENTS

In order to make the objectives, technical solutions and advantages of the present invention more apparent, the present invention will be further described in detail below in conjunction with the accompanying drawings and detailed embodiments.

The technical solutions in the embodiments of the present invention will be clearly and completely described in conjunction with the accompanying drawings in the embodiments of the present invention. It is apparent that the described embodiments are merely part of the embodiments of the present invention rather than all embodiments. Based on the embodiments of the present invention, all other embodiments obtained by those skilled in the art without creative work fall within the scope of protection of the present invention.

In the description of the present invention, it should be understood that the terms "center", "longitudinal direction", "transverse direction", "length", "width", "thickness", "upper", "lower", "front", " "rear", "left", "right", "vertical", "horizontal", "top", "bottom", "inner", "outer", "clockwise", "counterclockwise" etc. indicate spatial relationship that is based on the orientation or positional relationship shown in the drawings, and is only for the convenience of describing the application and simplifying the description, rather than indicating or implying that the device or element referred to must have a specific orientation and be constructed and operated in a specific orientation, therefore these cannot be understood as a limitation to the present invention.

In addition, the terms "first" and "second" are used for descriptive purposes only, and cannot be understood as indicating or implying relative importance or implicitly indicating the number of technical features referred to. Therefore, the features defined as "first" and "second" may explicitly or implicitly include one or more of the features. In the description of the present invention, the meaning of "plurality" is two or more, unless otherwise specified.

In the present invention, unless otherwise clearly specified and limited, the terms "installation", "connected", "connected", "fixed" and other terms should be interpreted as broad meaning, for example, it may be connected or detachably connected, or formed into one entity; It may be a physical connection or electrical connection; it may be directly connected, or it may be indirectly connected through an intermediate medium; it may be an internal communication or interaction between two elements. Those skilled in the art can understand the specific meanings of the above terms in the present invention according to specific situations.

In the present invention, unless otherwise clearly specified and defined, the first feature "above" or "below" the second feature may include the direct contact of the first and second feature, or may include the first and second features not in direct contact but through another feature therebetween. Moreover, the first feature is "on", "above" and "over" the second feature includes that the first feature is directly above and obliquely above the second feature, or simply means that the first feature is higher in level than the second feature. The first feature is "under", "below" and "underneath" the second feature includes that the first feature is directly below and obliquely below the second feature, or simply means that the first feature is lower in level than the second feature.

In the description of the present invention, the description referring to the terms "one embodiment", "some embodiments", "examples", "specific examples", or "some examples" means the specific features, structures, materials or characteristics described in conjunction with the embodiment or examples is included in at least one embodiment or example of the present invention. In the present invention, the illustrative expression of the above terms should not be understood as having to refer to the same embodiment or example. Moreover, the specific features, structures, materials, or characteristics described may be combined in any suitable manner in any one or more embodiments or examples. In addition, those skilled in the art may bind and combine different embodiments or examples described in the present invention.

The present invention provides a multi-plate laminating device for a lithium battery cell, which includes a laminating platform, a separator releasing mechanism, a film-coating apparatus, and position correcting platforms, and further includes electrode plate feeders/conveyors and a plurality of robotic arms.

The separator releasing mechanism and the film-coating apparatus are disposed above the laminating platform, and the film-coating apparatus is used for guiding the separator of the separator releasing mechanism onto the laminating platform. The position correcting platforms are located on left and right sides of the laminating platform respectively, in order to correct positions of the electrode plates transported on the left and right sides. The electrode plate feeders/conveyors are arranged on the left and right sides of the laminating platform, respectively, and each positioned on an outside of the position correcting platforms away from the laminating platform. Each electrode plate conveyor is a conveying belt means having a vacuum adsorbing structure. The plurality of robotic arms are provided at preset positions for transporting the electrode plates between various processing procedures.

A charge-coupled-device (CCD) vision apparatus is arranged above each of the position correcting platforms correspondingly, and the vision apparatus is used for guiding each position correcting platform to perform position correction on each electrode plate.

For example, in a lithium battery laminating device or a die-cutting/cutting/laminating integrated device, two or more electrode plates are laminated on a same laminating platform at the same time, with a fixed interval between the electrode plates. The separator releasing mechanism and the laminating device for guiding the separator into the laminating platform are arranged above the laminating platform. The position correcting platforms for the electrode plates are positioned on both sides of the laminating platform, and a CCD vision apparatus is located above the position correcting platform to guide the position correcting platforms to correct the position of each of the electrode plates. The electrode plate feeders/conveyors are arranged on the left and right sides of the laminating platform, respectively, and each positioned on the outside of the position correcting platforms away from the laminating platform. When laminating, a plurality of electrode plates are drawn from the electrode plate feeders/conveyors at the same time, and are placed on the corresponding position correcting platform for position correction simultaneously. After the position correction, the plurality of electrode plates are simultaneously transported to the same laminating platform by the robotic arms for laminating. Specifically, in a cathode circulation process of the die-cutting/cutting/laminating integrated device, the incoming material is a rolled material with or without tabs, and undergoes unwinding-tension control- offset rectification- die-cutting/ cutting into electrode plates-powdering- size inspection- NG rejection- transporting qualified plates to vacuum conveyor- buffering- transportation by robotic arms- position adjusting platform-individual position adjusting- transported by robotic arms- placing on the same laminating platform at the same time- continuous lamination with separators. The anode plates undergo identical process, and are laminated with the cathode plates and the separators alternately, and finally a laminated structure is formed and discharged to complete the lamination of the cell.

The present invention further provides a laminating method, which may be applied by the aforementioned multi-plate laminating device for a lithium battery cell, and includes:
Step 100: pre-processing incoming electrode plates to obtain the electrode plates to be laminated;
Step 200: transporting a plurality of the electrode plates to be laminated to position correcting platforms on left and right sides at a same time by robotic arms for position correction;
Step 300: transporting the electrode plates after the position correction and placing a preset number of the electrode plates at preset positions on the laminating platform side by side with the robotic arms;
Step 400: guiding a separator from a separator releasing mechanism over the laminating platform by a film-coating apparatus, covering the separator on the electrode plates at the preset positions;
Step 500: repeating above steps until a preset laminating amount of the electrode plates is reached to complete lamination of the battery cell.

Step 200: when transporting the plurality of the electrode plates to be laminated to the position correcting platforms on the left and right sides at a same time by the robotic arms for position correction, cathodes and anodes are respectively placed on the position correcting platforms on the left and right sides in order to carry out the position correction respectively.

Step 100: pre-processing incoming electrode plates to obtain the electrode plates to be laminated, and pre-processing includes:
Step 101: unwinding the incoming rolled material and controlling tension, and rectifying offsets;
Step 102: die-cutting/ cutting rectified incoming material into the electrode plates;
Step 103: carrying out surface powdering and size inspection on the electrode plates after die-cutting/cutting;
Step 104: performing NG rejection on unqualified electrode plates in the size inspection, and transferring qualified electrode plates after the NG rejection to vacuum conveyor for buffering.

Step 300: when transporting the electrode plates after the position correction and placing a preset number of the electrode plates at preset positions on the laminating platform side by side with the robotic arms, the preset number is any finite natural number that is no less than 2, and a maximum value of the preset number is manually selected according to an arrangement of the multi-plate laminating device for a lithium battery cell.

The above a multi-plate laminating device for a lithium battery cell and a laminating method thereof will be further explained in conjunction with the accompanying drawings.

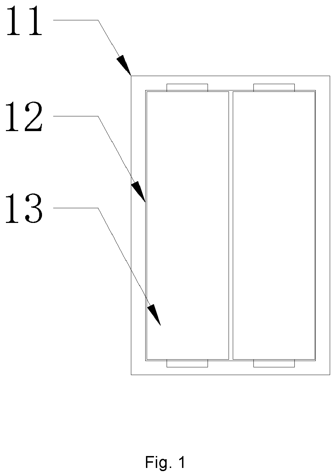

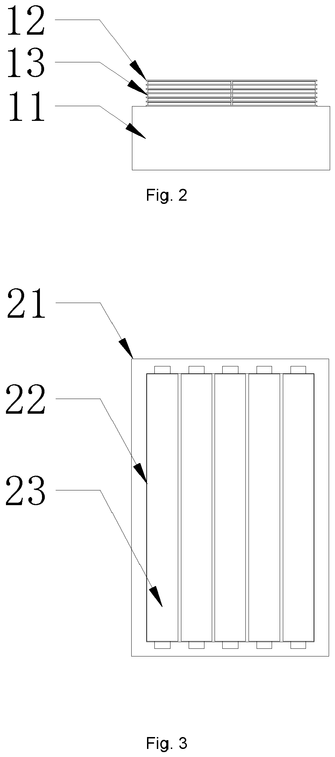

Referring to Figs. 1 and 2, Embodiment 1 provides an example in which 2 electrode plates are laminated simultaneously on the same laminating platform. The first laminating platform 11 is arranged at the bottom, and is followed by the first separator 12, the first electrode plate 13, the first separator 12, the first electrode plate 13, ... and the first separator 12 laminated in sequence on top, and the laminate is discharged as a whole. It should be noted that adjacent first electrode plates 13 on top and bottom of each of the first separator 12 have opposite poles, namely, in an order of a cathode, an anode, a cathode, an anode, ... (or an anode, a cathode, an anode, a cathode, ...).

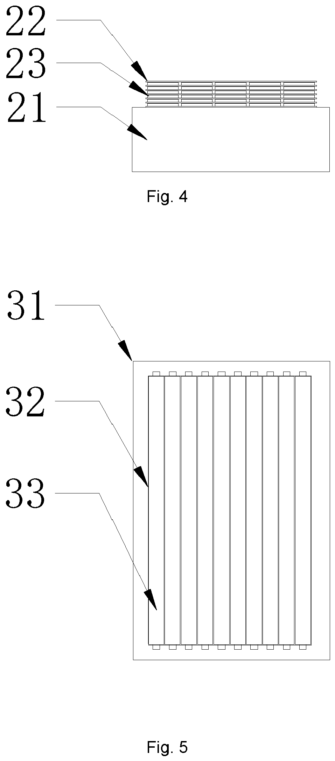

Referring to Figs. 3 and 4, Embodiment 2 provides an example in which 5 electrode plates are laminated simultaneously on the same laminating platform. The second laminating platform 21 is arranged at the bottom, and is followed by the second separator 22, the second electrode plate 23, the second separator 22, the second electrode plate 23, ... and the second separator 22 laminated in sequence on top, and the laminate is discharged as a whole. It should be noted that adjacent second electrode plates 23 on top and bottom of each of the second separator 22 have opposite poles, namely, in an order of a cathode, an anode, a cathode, an anode, ... (or an anode, a cathode, an anode, a cathode, ...).

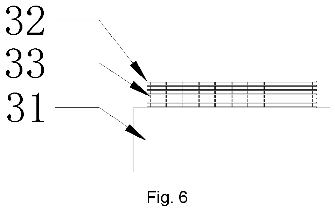

Referring to Figs. 5 and 6, Embodiment 3 provides an example in which 10 electrode plates are laminated simultaneously on the same laminating platform. The third laminating platform 31 is arranged at the bottom, and is followed by the third separator 32, the third electrode plate 33, the third separator 32, the third electrode plate 33, ... and the third separator 32 laminated in sequence on top, and the laminate is discharged as a whole. It should be noted that adjacent third electrode plates 33 on top and bottom of each of the third separator 32 have opposite poles, namely, in an order of a cathode, an anode, a cathode, an anode, ... (or an anode, a cathode, an anode, a cathode, ...).

In Embodiments 1-3 as shown in Figs. 1-6, the lamination of multiple plates is illustrated by examples of 2, 5, and 10 electrode plates simultaneously laminated, but is not limited to the above numbers, and the may be any reasonable natural number no less than 2.

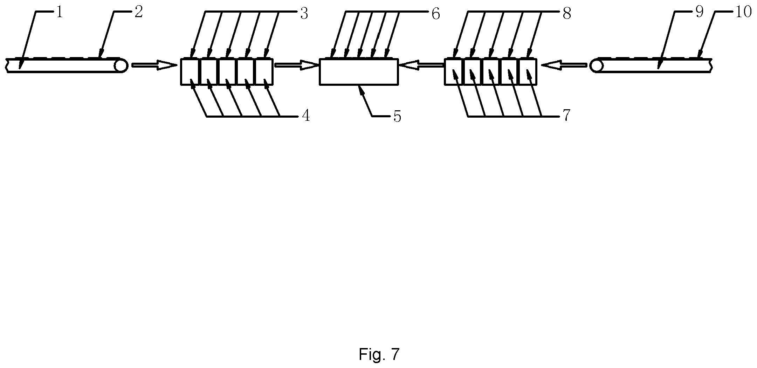

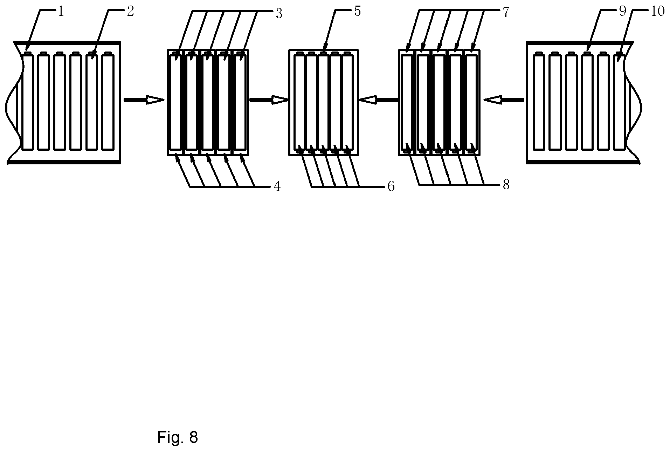

Referring to Figs. 7 and 8, Embodiment 4 illustrates a material incoming process of the die-cutting/cutting/laminating integrated device when a plurality of electrode plates are laminated at the same time. The cathode plates 2 are adsorbed on the cathode conveying belt 1 by vacuum, and are transported forward in order, with a fixed spacing between the electrode plates. The anode plates 10 are adsorbed on the anode conveying belt 9 by vacuum, and are transported forward in order, with a fixed spacing between the electrode plates. Unqualified electrode plates are removed after the size inspection, and qualified positive electrode plates 3 are transported to the cathode position correcting platform 4. The position of each electrode plate is individually corrected through the CCD. Similarly, for the anode plates 10, unqualified electrode plates are removed after the size inspection, and qualified negative electrode plates 8 are transported to the anode position correcting platform 7. The position of each electrode plate is individually corrected through the CCD. After the position correction, the qualified positive electrode plates 3 and negative electrode plates 8 are simultaneously transferred to the laminating platform 5 and laminated with the separator, as the laminated electrode plates 6.

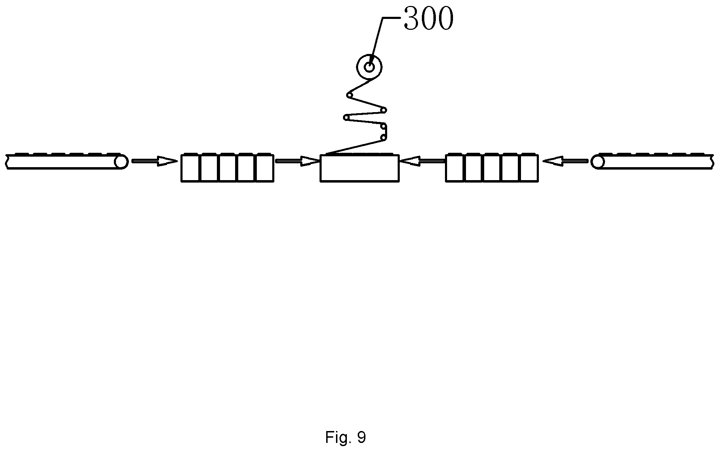

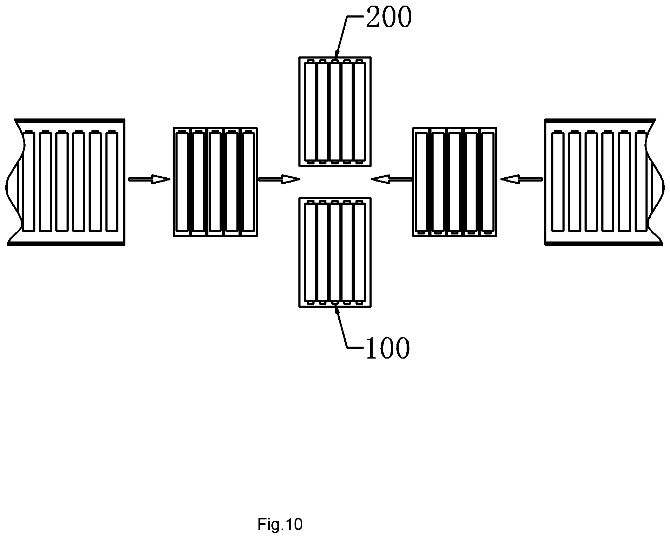

Referring to Figs. 9 and 10, Embodiment 5 further provides a first laminating platform 100 and second laminating platform 200 to the die-cutting/cutting/laminating integrated device of Embodiment 4. Two laminating platforms may carry out laminating process simultaneously or in sequence. Each of the laminating platforms is provided with a separator releasing mechanism and a film covering mechanism, and the separator releasing mechanism 300 is arranged directly above each laminating platform.

Compared to the prior, the present invention provides a multi-plate laminating device for a lithium battery cell and a laminating method thereof. A plurality of electrode plates are laminated at the same time on a laminating platform, which significantly improves the lamination efficiency of the laminating device. A separator is covered on multiple electrode plates at a time thus improves the efficiency of film coating. The plurality of electrode plates are fed simultaneously, so that feeding efficiency of the electrode plates is improved and the cost of feeding is reduced. The plurality of electrode plates are discharged simultaneously, so that discharging efficiency of the electrode plates is improved and the cost of discharging is reduced. By improving the processing efficiency of laminating, film covering, feeding, and discharging, the labor and material costs of each process are reduced, and the time cost of laminating lithium battery cells is greatly lowered, thus this reduces costs and enhances the economic efficiency and competitiveness of enterprises.

The above is merely for illustrative purpose to further describe the technical content of the present invention for easier understanding of the reader, but it is not limited thereto. Any technical extension or re-creation made based on the present invention shall fall within the scope of protection of the present invention. The scope of protection of the present invention is defined by the appended claims.

## Claims

1. A multi-plate laminating device for a lithium battery cell, **characterized in that** the multi-plate laminating device for a lithium battery cell comprises: a laminating platform, a separator releasing mechanism, a film-coating apparatus, and position correcting platforms, the separator releasing mechanism and the film-coating apparatus are disposed above the laminating platform, and the film-coating apparatus is used for guiding a separator of the separator releasing mechanism onto the laminating platform, the position correcting platforms are located on left and right sides of the laminating platform respectively, in order to correct positions of the electrode plates transported on the left and right sides.

2. The multi-plate laminating device for a lithium battery cell of claim 1, **characterized in that** a charge-coupled-device (CCD) vision apparatus is arranged above each of the position correcting platforms correspondingly, and the CCD vision apparatus is used for guiding each position correcting platform to perform position correction on each electrode plate.

3. The multi-plate laminating device for a lithium battery cell of claim 1, **characterized in that** the multi-plate laminating device further provides electrode plate feeders/conveyors on the left and right sides of the laminating platform, respectively, and are each arranged on an outside of the position correcting platforms away from the laminating platform.

4. The multi-plate laminating device for a lithium battery cell of claim 3, **characterized in that** each electrode plate conveyor is a conveying belt means having a vacuum adsorbing structure.

5. The multi-plate laminating device for a lithium battery cell of claim 1, **characterized in that** a plurality of robotic arms are provided, which are set at preset positions for transporting the electrode plates between each processing procedure.

6. A laminating method applied by the multi-plate laminating device for a lithium battery cell of any of claims 1 to 5, comprising:
pre-processing incoming electrode plates to obtain the electrode plates to be laminated;
transporting a plurality of the electrode plates to be laminated to position correcting platforms on left and right sides at a same time by robotic arms for position correction;
transporting the electrode plates after the position correction and placing a preset number of the electrode plates at preset positions on the laminating platform side by side with the robotic arms;
guiding a separator from a separator releasing mechanism over the laminating platform by a film-coating apparatus, covering the separator on the electrode plates at the preset positions; and
repeating above steps until a preset laminating amount of the electrode plates is reached to complete lamination of the battery cell.

7. The laminating method of claim 6, **characterized in that** when transporting the plurality of the electrode plates to be laminated to the position correcting platforms on the left and right sides at a same time by the robotic arms for position correction, cathodes and anodes are respectively placed on the position correcting platforms on the left and right sides in order to carry out the position correction respectively.

8. The laminating method of claim 6, **characterized in that** when pre-processing incoming electrode plates to obtain the electrode plates to be laminated, the pre-processing includes:
unwinding incoming rolled material followed by controlling tension and rectifying any offset;
die-cutting/ cutting rectified incoming material into the electrode plates;
carrying out surface powdering and size inspection on the electrode plates after die-cutting/cutti ng;
performing NG rejection on unqualified electrode plates in the size inspection, and transferring qualified electrode plates after the NG rejection to vacuum conveyor for buffering.

9. The laminating method of claim 6, **characterized in that** when transporting the electrode plates after the position correction and placing a preset number of the electrode plates at preset positions on the laminating platform side by side with the robotic arms, the preset number is any finite natural number that is no less than 2, and a maximum value of the preset number is manually selected according to an arrangement of the multi-plate laminating device for a lithium battery cell.
